# EUROPEAN PATENT SPECIFICATION

(11) **EP 3 929 519 B1**
(45) Date of publication and mention of the grant of the patent: **11.12.2024**
(21) Application number: 21179259.3
(22) Date of filing: 14.06.2021
(51) Int. Cl.: F28D 15/00

(54) **HEAT TRANSFER PLATE**
WÄRMEÜBERTRAGUNGSPLATTE
PLAQUE DE TRANSFERT DE CHALEUR

(30) Priority: 23.06.2020 JP 2020107938
(43) Date of publication of application: 29.12.2021
(73) Proprietor: Tokuden Co., Ltd., Kyoto-shi Kyoto 607-8345 (JP)
(72) Inventor: KITANO, Takatsugu, Kyoto, 607-8345 (JP)
(74) Representative: Horn Kleimann Waitzhofer Schmid-Dreyer Patent- und Rechtsanwälte PartG mbB

(56) References cited:
- DE-A1- 10 036 001
- US-B1- 6 413 068
- US-B2- 9 849 610

## Description

### TECHNICAL FIELD

The present invention relates to a heat transfer plate that exchanges heat with a thermal processing object.

### TECHNICAL BACKGROUND

Conventionally, as is shown in Japanese Unexamined Patent Application (JP-A) No. H8-296986, a heat transfer plate in which a rectilinear jacket chamber is formed inside a metal main body is known as a heat transfer plate that exchanges heat with a thermal processing object. A gas-liquid two-phase heating medium is enclosed in this jacket chamber, and the metal main body is uniformly heated by a latent heat transfer of this heating medium.

Here, in a case in which the size of the metal main body is increased, because there is also an increase in the internal volume inside the jacket chamber, due to the constraints imposed by the pV value of a pressure vessel (wherein p is the maximum working pressure [MPa], and V is the internal volume [m³]), a structure is employed in which jacket chambers are constructed independently of each other, and each jacket chamber is formed having a rectilinear shape. As a result, uniform heating can only be performed in a rectilinear direction in the heat transfer plate.

However, in a heat transfer plate that is subject to the constraints of the pV value as well, there are cases in which it is desirable that uniform heating be able to be achieved in a perpendicular direction relative to the rectilinear direction. In such cases, it is necessary to provide a group of drill holes forming a separate jacket chamber within a wall thickness of the jacket chamber that is not orthogonal to the group of drill holes forming this jacket chamber, and the problem arises that the increase in wall thickness that this structure requires causes both the size and the weight of the metal main body to increase.
Document US 9 849 610 B2 discloses an upper plate of a mold induction heating device. The plate has a generally ring-shaped metal plate body. In the metal plate body are a plurality of jacket chambers formed radially from a central portion of the metal plate body. In the metal plate body is formed a communication passage between inner end portions of adjacent jacket chambers in the diameter direction.
Document DE 100 36 001 A1 discloses a solid heat transfer medium in which a recess is formed. The recess is forming a closed loop. A liquid heat transfer medium can circulate within this closed loop for transferring heat.

### DISCLOSURE OF THE INVENTION

### PROBLEMS TO BE SOLVED BY THE INVENTION

The present invention was therefore conceived in order to solve the above-described problem, and it is a principal object thereof to make it possible, in a heat transfer plate that is subject to the constraints of a pV value, to achieve temperature uniformity in both a radial direction and a circumferential direction without having to increase the thickness of the heat transfer plate.

### MEANS FOR SOLVING THE PROBLEM

Namely, a heat transfer plate according to the present invention is a heat transfer plate that is configured to perform a heat exchange with a thermal processing object. The heat transfer plate comprises a metal main body that is formed in a flat plate shape, and a plurality of jacket chambers that are formed in an interior of the metal main body and inside each of which is enclosed a gas-liquid two-phase heating medium, wherein the plurality of jacket chambers extend outwards in a radial configuration from a central portion of a heat transfer surface that is set as one surface of the metal main body, each one of the plurality of jacket chambers has a curved or bent configuration when looked at in plan view, and the plurality of jacket chambers are mutually independent of each other, or the plurality of jacket chambers are in mutual communication with each other via the central portion of the heat transfer plate.

If this type of heat transfer plate is employed, then because a plurality of jacket chambers extend outwards in a radial configuration from a central portion of a heat transfer surface, and because each one of the plurality of jacket chambers has a curved or bent configuration when looked at in plan view, it is possible, in a heat transfer plate that is subject to the constraints of a pV value (for example, a pV value of > 0.004), to achieve temperature uniformity in both a radial direction and a circumferential direction without having to increase the thickness of the heat transfer plate.

In order to improve the temperature uniformity in both a radial direction and a circumferential direction in the heat transfer surface even further, it is desirable that all of the plurality of jacket chambers have the same shape as each other.

In the same way, in order to improve the temperature uniformity in both a radial direction and a circumferential direction in the heat transfer surface even further, it is desirable that the plurality of jacket chambers be provided at equal intervals from each other in a circumferential direction around a center of the heat transfer surface.

Moreover, in order to improve the temperature uniformity in both a radial direction and a circumferential direction in the heat transfer surface even further, it is desirable that jacket chambers that are mutually adjacent to each other from among the plurality of jacket chambers be formed so as to be at the same distance from each other.

In order to create a structure in which jacket chambers that are mutually adjacent to each other are formed so as to be at the same distance from each other, forming the jacket chambers such that they follow involute curves that are based on a base circle which is centered on the center of the heat transfer surface may be considered. At this time, the plurality of jacket chambers in this involute curve configuration are disposed at equal intervals from each other around the base circle.

In order to improve the temperature uniformity in a circumferential direction in the heat transfer surface, it is desirable that an inner-side end and an outer-side end of each jacket chamber have a phase difference of 180° or more around the center of the heat transfer surface.

In order to uniformize a heat transfer from a heating medium that has been enclosed in the jacket chambers to the heat transfer surface, it is desirable that a cross-sectional configuration of the jacket chambers be formed as a rectangular shape having one side that is parallel to the heat transfer surface. Additionally, the cross-sectional configuration of the jacket chambers is formed such that the heat transfer surface side thereof is formed as a curved surface.

In order to enable jacket chambers that are curved or bent when looked at in plan view to be formed easily, it is desirable that the jacket chambers be formed by providing a seal over grooves that have been machined into one surface of the metal main body using a cover component.

A thermal processing object is provided so as to be in contact with the heat transfer surface that is set as one surface (i.e., a front surface) of the metal main body. Additionally, in some cases, a heating mechanism or cooling mechanism is provided on a surface (i.e., a rear surface) of the metal main body that is on the opposite side from this heat transfer surface. Because of this, it is desirable that an input/output port that is used to enclose a gas-liquid two-phase heating medium inside the jacket chambers or to discharge the gas-liquid two-phase heating medium from the jacket chambers be formed in an outer-side circumferential surface of the metal main body. If this structure is employed, the input/output port does not obstruct operations.

### EFFECTS OF THE INVENTION

According to the present invention which is formed in this manner, it is possible to achieve temperature uniformity in both a radial direction and a circumferential direction without having to increase the thickness of a heat transfer plate.

### BRIEF DESCRIPTION OF THE DRAWINGS

FIG. 1 is a perspective view showing a heat transfer plate and a heating mechanism according to an embodiment of the present invention.
FIG. 2 is a plan view showing the heat transfer plate of the same embodiment.
FIG. 3 is a cross-sectional view taken along a line A-A in FIG. 2 in the same embodiment and also shows a partially enlarged cross-sectional portion.
FIG. 4 is a plan view showing a heat transfer plate of a variant embodiment.
FIG. 5 is a plan view showing a heat transfer plate of a variant embodiment.
FIG. 6 is a cross-sectional view showing a heat transfer plate of a variant embodiment.

### BEST EMBODIMENTS FOR IMPLEMENTING THE INVENTION

Hereinafter, an embodiment of a heat transfer plate according to the present invention will be described with reference to the drawings.

### 1. DEVICE STRUCTURE

A heat transfer plate 100 according to the present embodiment performs a heat exchange with a thermal processing object W, and is used in processing that is performed in conjunction, for example, with thermal processing. More specifically, the heat transfer plate 100 is incorporated into a metal mold that is used in press-working and used to heat or cool the metal mold. Alternatively, a vessel containing a powder or a liquid can be placed on the heat transfer plate 100 so that a bottom plate of this vessel can be heated or cooled. Alternatively, the heat transfer plate 100 can be incorporated into a resin molding mold and used to heat or cool this mold.

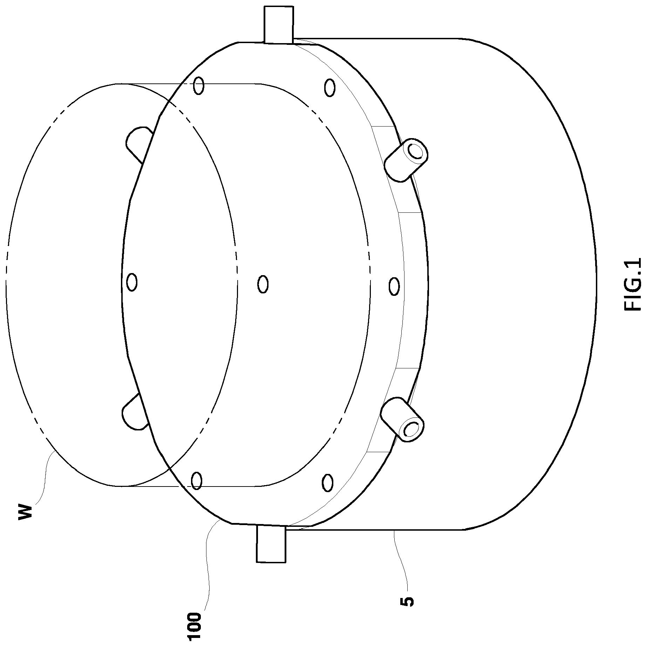

As is shown in FIG. 1, the thermal processing object W is placed on a front surface of the heat transfer plate 100 of the present exemplary embodiment and is heated by a heating mechanism 5 such as an induction heating mechanism or the like that is provided at a rear surface of the heat transfer plate 100. Note that this induction heating mechanism has a steel core and an induction coil that is wound around this steel core, and heats the heat transfer plate 100 by induction.

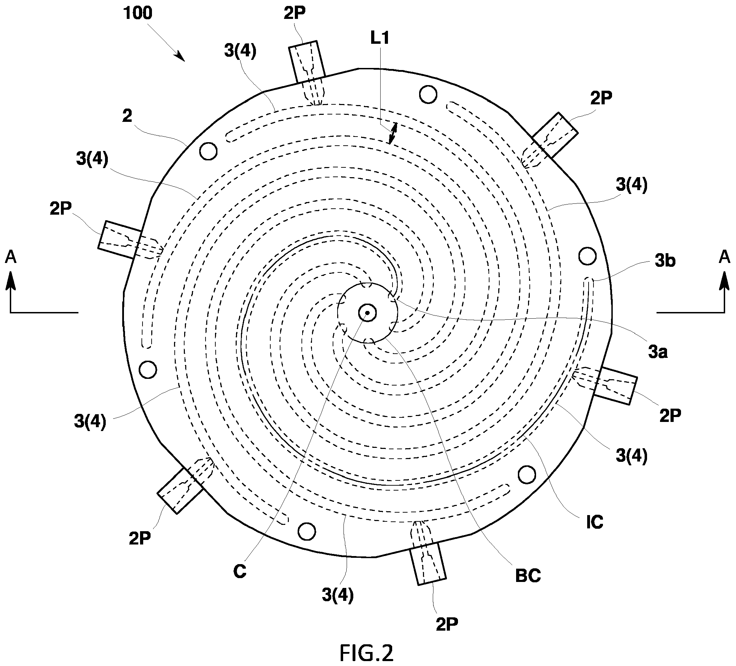

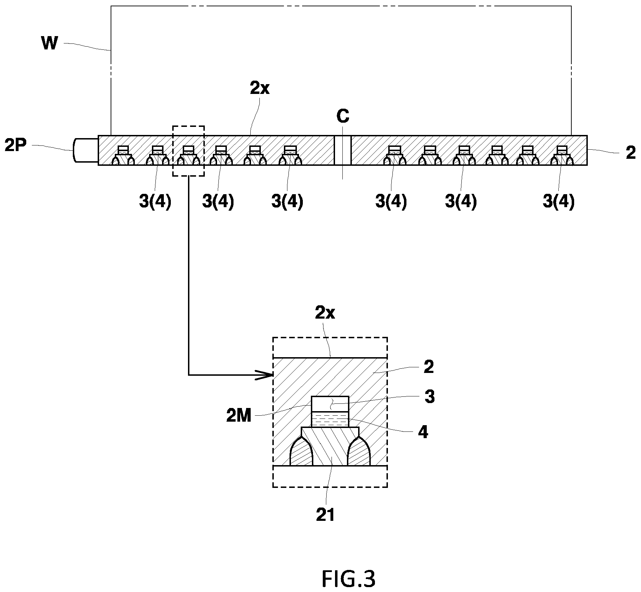

More specifically, as is shown in FIG. 2 and FIG. 3, the heat transfer plate 100 has a metal main body 2, which is formed in a flat plate shape, and a plurality of jacket chambers 3 that are formed inside the metal main body 2 and inside which is enclosed a gas-liquid two-phase heating medium 4 such as water or the like. Note that, in FIG. 2, six jacket chambers 3 are shown, however, the number of jacket chambers 3 may be altered as is appropriate.

The metal main body 2 is formed, as an example, in a circular shape when looked at in plan view, and is formed from carbon steel, stainless steel, aluminum, or an aluminum alloy or the like. In addition, one surface (i.e., a front surface) of the metal main body 2 forms a heat transfer surface 2x that exchanges heat with the thermal processing object W. Here, the heat transfer surface 2x is the surface that is subject to the uniform heating by the jacket chambers 3, and is formed in a substantially circular shape when looked at in plan view.

As is shown in FIG. 2, the plurality of jacket chambers 3 extend outwards in a radial configuration from a central portion of this heat transfer surface 2x that has been set as one surface of the metal main body 2, and each one of this plurality of jacket chambers 3 has either a curved shape or a bent shape when looked at in plan view. Here, an inner-side end 3a of the jacket chambers 3 is positioned adjacent to a center C of the heat transfer surface 2, while an outer-side end 3b of the jacket chambers 3 is positioned adjacent to an outer edge portion of the heat transfer surface 2x.

More specifically, each one of the plurality of jacket chambers 3 is formed having the same shape as the other jacket chambers 3, and these jacket chambers 3 are provided at equal intervals in a circumferential direction around the center C of the heat transfer surface 2x, in other words, so as to be rotationally symmetrical around the center C of the heat transfer surface 2x. In addition, jacket chambers 3 that are mutually adjacent to each other from among the plurality of jacket chambers 3 are formed so as to be at the same distance L1 from each other.

More specifically, the jacket chambers 3 are formed so as to follow involute curves IC that are based on a base circle BC which is centered on the center C of the heat transfer surface 2x. In other words, the jacket chambers 3 are formed in an involute curve configuration whose trajectory lines (i.e., center lines) follow the involute curves IC. Furthermore, the inner-side end 3a and the outer-side end 3b of each jacket chamber 3 have a phase difference of 180° or more around the center C of the heat transfer surface 2x. In the present embodiment, the jacket chambers 3 have a phase difference of between 300° and 360° around the center C of the heat transfer surface 2x so that they extend for substantially a full turn around the center C of the heat transfer surface 2x.

Moreover, as is shown in FIG. 3, a cross-sectional configuration of the jacket chambers 3 is formed as a rectangular shape having one side that is parallel to the heat transfer surface 2x. The cross-sectional configuration of the jacket chambers 3 is formed such that this cross-section is the same extending from the inner-side end 3a to the outer-side end 3b thereof. Furthermore, the jacket chambers 3 are each provided so as to be the same distance from the heat transfer surface 2x from the inner-side end 3a to the outer-side end 3b thereof. Note that it is also possible for the jacket chambers 3 to not have the same cross-section extending from the inner-side end 3a to the outer-side end 3b thereof, and the cross-sectional configuration may vary depending on the location thereof. For example, it is also possible for the jacket chambers 3 to be formed such that the distance between a lower surface of the jacket chambers 3 and the heat transfer surface 2x thereof gradually increases (i.e., such that the depth of the grooves forming the jacket chambers 3 becomes gradually deeper) or gradually decreases (i.e., such that the depth of the grooves forming the jacket chambers 3 becomes gradually shallower) from the inner-side end 3a to the outer-side end 3b thereof.

As is shown by the partially enlarged portion of the diagram in FIG. 3, the jacket chambers 3 are formed by providing a seal over grooves 2M that have been machined into one surface of each metal main body 2 using respective cover components 21. Here, an adhesive is used to seal the cover components 21 onto the grooves 2M of the metal main body 2.

In addition to this, an input/output port 2P that is used to enclose a gas-liquid two-phase heating medium 4 inside the jacket chambers 3 or to discharge the gas-liquid two-phase heating medium 4 from the jacket chambers 3 is formed in an outer-side circumferential surface of the metal main body 2. Note that, for example, pure water, alcohol, an organic heating medium, or naphthalene or the like can be used as the heating medium 4.

When this heat transfer plate 100 is heated by the heating mechanism 5, the temperature of the heat transfer surface 2x is uniformized by the latent heat transfer of the gas-liquid two-phase heating medium 4 that has been decompressed and enclosed inside the jacket chambers 3. Here, because the respective jacket chambers 3 extend not only in radial directions, but are also curved in a circumferential direction, the temperature of the heat transfer surface 2x is uniformly heated not only in the radial directions, but also in the circumferential direction by the latent heat transfer of the gas-liquid two-phase heating medium.

### 2. EFFECTS OF THE PRESENT INVENTION

According to the heat transfer plate 100 according to the present embodiment which is formed in the manner described above, because a plurality of jacket chambers 3 extend outwards in a radial configuration from a central portion of the heat transfer plate 2x, and each one of the plurality of jacket chambers 3 has either a curved or bent configuration when looked at in plan view, it is possible to achieve temperature uniformity in both a radial direction and a circumferential direction without having to increase the thickness of the heat transfer plate 100.

### 3. EFFECTS OF ADDITIONAL EMBODIMENTS

Note that the present invention is not limited to the above-described embodiment.

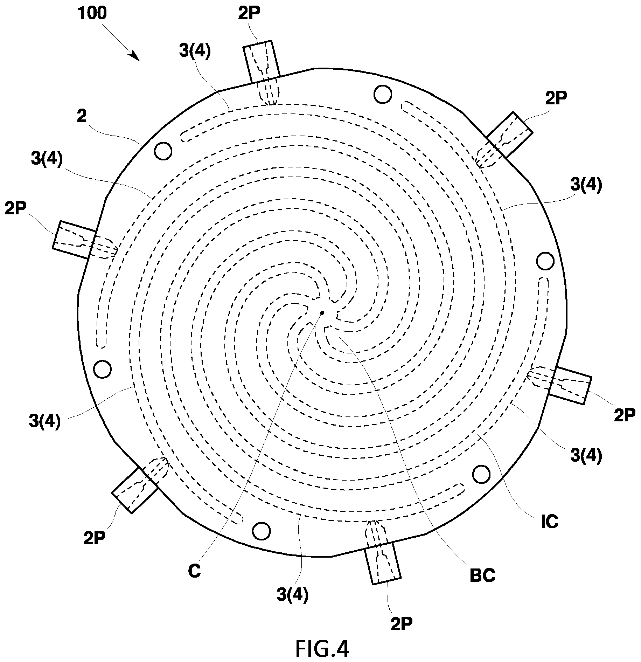

For example, in the above-described embodiment, the plurality of jacket chambers 3 are mutually independent of each other, however, as is shown in FIG. 4, it is also possible for the plurality of jacket chambers 3 to be in mutual communication with each other. In FIG. 4 a structure is shown in which the plurality of jacket chambers 3 are in mutual communication with each other via the central portion of the heat transfer plate 2x. In addition, it is also possible to employ a structure in which the jacket chambers 3 that are in mutual communication with each other are divided up so as to form a plurality of jacket chamber groups that are in mutual communication with each other.

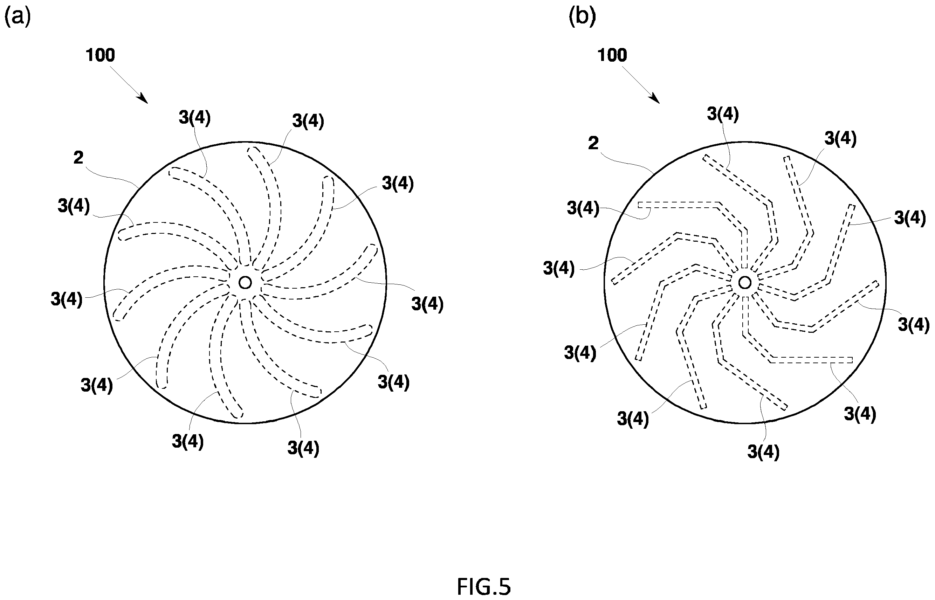

In the above-described embodiment, the configuration of the jacket chambers 3 is an involute curve configuration, however, in addition to this, it is possible to employ a curve configuration in which the curvature changes continuously from the inner-side end 3a to the outer-side end 3b, a circular arc configuration (see FIG. 5 (a)), or an elliptical arc configuration. In addition, it is also possible for a combination of jacket chambers having a rectilinear configuration and jacket chambers having a curved configuration to be employed, or for a configuration in which a plurality of straight line configurations are combined together such that an angle of inclination relative to a radial direction thereof becomes larger in stages when looked at in plan view (see FIG. 5 (b)).

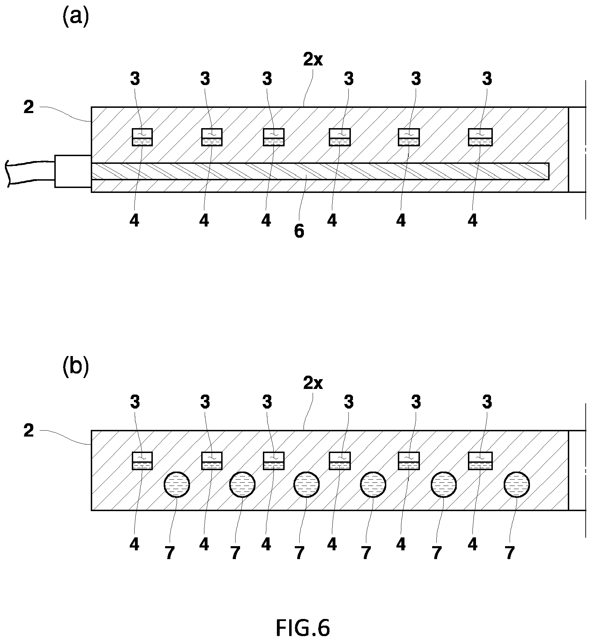

Furthermore, in the above-described embodiment, a structure is employed in which a heating mechanism or a cooling mechanism is provided externally of the heat transfer plate 100, however, it is also possible to employ a structure in which a heating mechanism or a cooling mechanism is internally provided inside the heat transfer plate 100. In a case such as this, as is shown in FIG. 6 (a), a method such as providing a heater 6 such as a cartridge heater or the like inside the metal main body 2, or, as is shown in FIG. 6 (b), a method such as providing cooling flow paths 7 through which a cooling medium flows inside the metal main body 2 may be considered.

In the above-described embodiment, the plurality of jacket chambers 3 all have the same shape as each other when looked at in plan view, however, it is also possible for the respective jacket chambers 3 to have mutually different configurations from each other when looked at in plan view.

The heat transfer plate of the above-described embodiment is formed in a circular shape when looked at in plan view, however, in addition to this, it is also possible for the heat transfer plate to be formed in a rectangular shape when looked at in plan view, or in different shapes depending on the application of the heat transfer plate.

### DESCRIPTION OF THE REFERENCE NUMERALS

- 100: Heat Transfer Plate
- 2: Metal Main Body
- 3: Jacket Chambers
- 2x: One Surface (Heat Transfer Surface) of Metal Main Body
- C: Center of Heat Transfer Surface
- BC: Base Circle
- IC: Involute Curve
- 3a: Inner-side End
- 3b: Outer-side End
- 21: Cover Component
- 2P: Input/Output Port

## Claims

1. A heat transfer plate (100) that is configured to perform a heat exchange with a thermal processing object (W), comprising:
a metal main body (2) that is formed in a flat plate shape; and
a plurality of jacket chambers (3) that are formed in an interior of the metal main body (2) and inside each of which is enclosed a gas-liquid two-phase heating medium (4), wherein
the plurality of jacket chambers (3) extend outwards in a radial configuration from a central portion of a heat transfer surface (2x) that is set as one surface of the metal main body (2),
each one of the plurality of jacket chambers (3) has a curved or bent configuration when looked at in plan view,
**characterized in that**
the plurality of jacket chambers (3) are mutually independent of each other, or the plurality of jacket chambers (3) are in mutual communication with each other via the central portion of the heat transfer plate (2x).

2. The heat transfer plate (100) according to Claim 1, wherein all of the plurality of jacket chambers (3) have the same shape as each other.

3. The heat transfer plate (100) according to Claim 1 or Claim 2, wherein the plurality of jacket chambers (3) are provided at equal intervals from each other in a circumferential direction around a center (C) of the heat transfer surface (2x).

4. The heat transfer plate (100) according to any one of Claim 1 through Claim 3, wherein jacket chambers (3) that are mutually adjacent to each other from among the plurality of jacket chambers (3) are formed so as to be at the same distance (L1) from each other.

5. The heat transfer plate (100) according to any one of Claim 1 through Claim 4, wherein the jacket chambers (3) are formed so as to follow involute curves (IC) that are based on a base circle (BC) which is centered on the center (C) of the heat transfer surface (2x).

6. The heat transfer plate (100) according to any one of Claim 1 through Claim 5, wherein an inner-side end (3a) and an outer-side end (3b) of each jacket chamber (3) have a phase difference of 180° or more around the center (C) of the heat transfer surface (2x).

7. The heat transfer plate (100) according to any one of Claim 1 through Claim 6, wherein a cross-sectional configuration of the jacket chambers (3) is formed as a rectangular shape having one side that is parallel to the heat transfer surface (2x).

8. The heat transfer plate (100) according to any one of Claim 1 through Claim 7, wherein the jacket chambers (3) are formed by providing a seal over grooves (2M) that have been machined into one surface of the metal main body (2) using a cover component (21).

9. The heat transfer plate (100) according to any one of Claim 1 through Claim 8, wherein an input/output port (2P) that is used to enclose a gas-liquid two-phase heating medium (4) inside the jacket chambers (3) or to discharge the gas-liquid two-phase heating medium (4) from the jacket chambers (3) is formed in an outer-side circumferential surface of the metal main body (2).

## Patentansprüche

1. Wärmeübertragungsplatte (100), die eingerichtet ist, einen Wärmeaustausch mit einem thermischen Verarbeitungsobjekt (W) durchzuführen, aufweisend:
einen Metallhauptkörper (2), der in einer flachen Plattenform ausgebildet ist; und
mehrere Mantelkammern (3), die in einem Inneren des Metallhauptkörpers (2) ausgebildet sind und in denen jeweils ein Gas-Flüssig-Zweiphasenheizmedium (4) eingeschlossen ist, wobei
die mehreren Mantelkammern (3) sich in einer radialen Konfiguration von einem zentralen Abschnitt einer Wärmeübertragungsfläche (2x), die als eine Fläche des Metallhauptkörpers (2) festgelegt ist, nach außen erstrecken,
jede der mehreren Mantelkammern (3) bei Betrachtung in Draufsicht eine gekrümmte oder gebogene Konfiguration aufweist,
**dadurch gekennzeichnet, dass**
die mehreren Mantelkammern (3) voneinander unabhängig sind oder die mehreren Mantelkammern (3) über den zentralen Abschnitt der Wärmeübertragungsplatte (2x) miteinander in Verbindung stehen.

2. Wärmeübertragungsplatte (100) nach Anspruch 1, wobei alle der mehreren Mantelkammern (3) die gleiche Form aufweisen.

3. Wärmeübertragungsplatte (100) nach Anspruch 1 oder Anspruch 2, wobei die mehreren Mantelkammern (3) in gleichen Abständen voneinander in einer Umfangsrichtung um eine Mitte (C) der Wärmeübertragungsfläche (2x) vorgesehen sind.

4. Wärmeübertragungsplatte (100) nach einem der Ansprüche 1 bis 3, wobei Mantelkammern (3), die unter den mehreren Mantelkammern (3) zueinander benachbart sind, so ausgebildet sind, dass sie sich in dem gleichen Abstand (L1) voneinander befinden.

5. Wärmeübertragungsplatte (100) nach einem der Ansprüche 1 bis 4, wobei die Mantelkammern (3) so ausgebildet sind, dass sie Evolventenkurven (IC) folgen, die auf einem Basiskreis (BC) basieren, der auf der Mitte (C) der Wärmeübertragungsfläche (2x) zentriert ist.

6. Wärmeübertragungsplatte (100) nach einem der Ansprüche 1 bis 5, wobei ein innenseitiges Ende (3a) und ein außenseitiges Ende (3b) jeder Mantelkammer (3) eine Phasendifferenz von 180° oder mehr um die Mitte (C) der Wärmeübertragungsfläche (2x) aufweisen.

7. Wärmeübertragungsplatte (100) nach einem der Ansprüche 1 bis 6, wobei eine Querschnittskonfiguration der Mantelkammern (3) als eine rechteckige Form ausgebildet ist, die eine Seite aufweist, die parallel zur Wärmeübertragungsfläche (2x) ist.

8. Wärmeübertragungsplatte (100) nach einem der Ansprüche 1 bis 7, wobei die Mantelkammern (3) durch Vorsehen einer Dichtung über Nuten (2M) ausgebildet sind, die in eine Fläche des Metallhauptkörpers (2) unter Verwendung einer Abdeckkomponente (21) eingearbeitet wurden.

9. Wärmeübertragungsplatte (100) nach einem der Ansprüche 1 bis 8, wobei ein Eingangs-/Ausgangsanschluss (2P), der verwendet wird, um ein Gas-Flüssig-Zweiphasenheizmedium (4) im Inneren der Mantelkammern (3) einzuschließen oder das Gas-Flüssig-Zweiphasenheizmedium (4) aus den Mantelkammern (3) abzugeben, in einer außenseitigen Umfangsfläche des Metallhauptkörpers (2) ausgebildet ist.

## Revendications

1. Plaque de transfert de chaleur (100) qui est configurée pour effectuer un échange de chaleur avec un objet de traitement thermique (W), comprenant :
un corps principal métallique (2) qui est formé en une forme de plaque plate ; et
une pluralité de chambres de chemise (3) qui sont formées à l'intérieur du corps principal métallique (2) et à l'intérieur desquelles est enfermé un milieu chauffant à deux phases gaz-liquide (4), dans laquelle
la pluralité de chambres de chemise (3) s'étendent vers l'extérieur dans une configuration radiale à partir d'une partie centrale d'une surface de transfert de chaleur (2x) qui est définie comme une surface du corps principal métallique (2),
chacune de la pluralité de chambres de chemise (3) a une configuration incurvée ou courbée lorsqu'elle est vue en vue de dessus,
**caractérisée en ce que**
la pluralité de chambres de chemise (3) sont mutuellement indépendantes les unes des autres, ou la pluralité de chambres de chemise (3) sont en communication mutuelle les unes avec les autres via la partie centrale de la plaque de transfert de chaleur (2x).

2. Plaque de transfert de chaleur (100) selon la revendication 1, dans laquelle toutes de la pluralité de chambres de chemise (3) ont la même forme les unes que les autres.

3. Plaque de transfert de chaleur (100) selon la revendication 1 ou la revendication 2, dans laquelle la pluralité de chambres de chemise (3) sont prévues à des intervalles égaux les unes des autres dans une direction circonférentielle autour d'un centre (C) de la surface de transfert de chaleur (2x).

4. Plaque de transfert de chaleur (100) selon l'une quelconque de la revendication 1 à la revendication 3, dans laquelle des chambres de chemise (3) qui sont mutuellement adjacentes les unes aux autres parmi la pluralité de chambres de chemise (3) sont formées de manière à être à la même distance (L1) les unes des autres.

5. Plaque de transfert de chaleur (100) selon l'une quelconque de la revendication 1 à la revendication 4, dans laquelle les chambres de chemise (3) sont formées de manière à suivre des courbes en développante (IC) qui sont basées sur un cercle de base (BC) qui est centré sur le centre (C) de la surface de transfert de chaleur (2x).

6. Plaque de transfert de chaleur (100) selon l'une quelconque de la revendication 1 à la revendication 5, dans laquelle une extrémité côté intérieur (3a) et une extrémité côté extérieur (3b) de chaque chambre de chemise (3) ont une différence de phase de 180° ou plus autour du centre (C) de la surface de transfert de chaleur (2x).

7. Plaque de transfert de chaleur (100) selon l'une quelconque de la revendication 1 à la revendication 6, dans laquelle une configuration en coupe transversale des chambres de chemise (3) est formée comme une forme rectangulaire ayant un côté qui est parallèle à la surface de transfert de chaleur (2x).

8. Plaque de transfert de chaleur (100) selon l'une quelconque de la revendication 1 à la revendication 7, dans laquelle les chambres de chemise (3) sont formées en fournissant un joint d'étanchéité sur des rainures (2M) qui ont été usinées dans une surface du corps principal métallique (2) en utilisant un composant de couvercle (21).

9. Plaque de transfert de chaleur (100) selon l'une quelconque de la revendication 1 à la revendication 8, dans laquelle un orifice d'entrée/sortie (2P) qui est utilisé pour enfermer un milieu chauffant à deux phases gaz-liquide (4) à l'intérieur des chambres de chemise (3) ou pour décharger le milieu chauffant à deux phases gaz-liquide (4) à partir des chambres de chemise (3) est formé dans une surface circonférentielle côté extérieur du corps principal métallique (2).
